# EUROPEAN PATENT SPECIFICATION

(11) **EP 1 155 618 B1**
(45) Date of publication and mention of the grant of the patent: **06.10.2004**
(21) Application number: 00830354.7
(22) Date of filing: 17.05.2000
(51) Int. Cl.: A21D 2/18, A21D 8/04, A21D 13/06, A23L 1/0522, A23L 1/025

(54) **Bakery products containing high-pressure treated starch**
Mit hohem Druck behandelte Stärke enthaltende Backwaren
Produits de boulangerie contenant de l'amidon traité sous haute pression

(43) Date of publication of application: 21.11.2001
(73) Proprietor: BARILLA G. E R. FRATELLI S.p.A., 43100 Parma (IT)
(72) Inventor: Codovilli, Flavio, 28100 Novara (IT); Morbarigazzi, Nadia, 43010 Vigatto, (PR) (IT)
(74) Representative: Ferreccio, Rinaldo

(56) References cited:
- EP-A- 0 686 352
- EP-A- 0 804 884
- WO-A-99/29163
- US-A- 5 095 008
- DATABASE WPI Derwent Publications Ltd., London, GB; AN 1999-169878 XP002150820 & JP 11 018671 A (SHOWA SANGYO CO), 26 October 1999 (1999-10-26)

## Description

### Field of application

The present invention generally relates to the field of bakery products.

In particular, it relates to a method for the production of bread and bakery products characterized by a higher softness and by an improved storability if compared to traditional bakery products.

### Prior art

In the field of bread and bakery products in the last decades, consumers have generally demonstrated an increasing preference towards particularly soft and tender products.

Therefore, the food industry has tried to convey these features to its products by adding suitable additives.

Among the additives which have most frequently been used to make doughs and end products soft and tender, emulsifiers and, in particular, monoglycerides and diglycerides of food fatty acids can be mentioned.

However, these additives bring about a worsening of the bakery products flavor and their presence is in contrast with the trend of the last decades to consume foods as free as possible of unnatural ingredients.

Thus, there exists the problem of increasing the softness and storability of bakery products prepared on an industrial scale without using additives or other ingredients different from the traditional ones.

A first solution to the above-mentioned problem can be found in the prior art in the method described in the patent application JP7099879. According to this method, part of the mixture wheat flour is replaced with high-pressure (>200 Mpa) treated wheat flour.

The use of high pressure in food began in Japan towards the end of the 80s (Hayashi, R. (1989), Use of High Pressure in Food, San-Ei Publishing Co.) and afterwards it has been extended to different sorts of food, in particular to meat, fish, ham, sausage salami, fruit and vegetable juices in order to sterilize the food without heating them or changing their structures.

It has i.a. been described the use of high pressures in starch in order to gelatinize it at a lower temperature compared to the one used in traditional gelation processes under heating at atmospheric pressure (EP-A-0 804 884). The resulting starch has a very uniform gelation, which makes it particularly suitable for preparing spreads, sauces such as mayonnaise and the like.

The use of high-pressure treated flour in the preparation of bread has, however, been described for the first time in the above mentioned Japan paten application.

However, the Applicant has experimentally found that the improvement of the softness and storability features of the bakery products obtained with the method according to JP 7099879 was not so outstanding to justify an application on large scale of such a method, also taking into account the not negligible costs of the high-pressure treatment.

Moreover the doughs containing high-pressure treated flour turn out to be too sticky because of a change in the gluten structure brought about by the high pressure treatment. The dough transfer and shaping operations are seriously affected by the excessive stickiness of the dough, especially when devices for the production on industrial scale of bread and bakery products are used.

Alternative solutions to the above mentioned technical problem have therefore been sought, and it has been surprisingly found that using high-pressure treated starch instead of the high-pressure treated flour of the method according to JP 7099897, it was possible to obtain bakery products which are significantly softer, more tender, and more storable than the products obtained with the above-mentioned method of the prior art. The improvement has been such that it is now possible to justify the use of high-pressure treated starch also in the preparation of bakery products on industrial scale. Moreover, none of the technical inconveniences caused by the excessive stickiness of the doughs containing high-pressure treated flour have been found.

### Summary of the invention

Thus, the problem underlying the present invention has been solved by a method for the production of bread and bakery products in general, comprising the steps of:
- preparing a dough containing flour and water;
- subjecting such a dough to rising and baking
characterized in that at least 2% of the flour of said dough is replaced by high-pressure treated starch.

The high-pressure treated starch preferably replaces 2-20%, advantageously 5-10% of the flour.

Adding amylolytic enzymes can be convenient.

The dough can also comprise vegetable fats, salt, sugars, yeasts, eggs and other optional ingredients.

The invention also relates to a dough for the production of bakery products comprising flour and water and characterized in that at least 2% of the flour of said dough is replaced with a high-pressure treated starch.

Moreover, the present invention relates to a bakery product obtainable by baking the above dough and having, after being stored at room temperature for 30 days, a hardness at least 20% lower than that of a bakery product obtained with identical mixing, rising and baking steps, but starting from a dough where the high-pressure treated starch is replaced by an identical amount of flour.

The high-pressure treated starch can be obtained by subjecting a 20-50% starch aqueous dispersion, contained in containers which are hermetically sealed and resistant to very high pressures, to a pressure of 300-700 Mpa, preferably 550-650 Mpa, for about 5-15 minutes.

The starch can be selected among the group comprising wheat, rice, corn, tapioca, pea starch and preferably is wheat starch.

### Detailed description of the invention.

The present invention will now be further described with reference to some non-limitative examples given hereinbelow.

### EXAMPLE 1

A dough for bread containing, in weight parts, the following ingredients has been prepared:

| | |
|---|---|
| Wheat flour | 95 |
| Water | 45 |
| Vegetable oils | 6 |
| Yeast | 3 |
| Salt | 3 |
| Dextrose | 2 |

Mixture 1:1 w/w h.p. starch: water 10

The mixture of high pressure treated starch ("h.p. starch") and water had been previously prepared subjecting the 50% w/w water dispersion of wheat starch to a pressure of 600 Mpa for 5 minutes. During such a treatment the dispersion was held in a hermetically sealed container.

The above-listed components were mixed with a classical spiral kneading machine for 2 minutes at a low speed and for 10 minutes at a high speed, then the dough thus obtained was left to stand for 15 minutes.

Afterwards, pieces of about 460 g were obtained from the dough. Such pieces were then pre-fermented for 15 minutes at 25°C and then transferred to moulds. The pieces were then subjected to rising for 90 minutes at 36°C and 90% r.h. (relative humidity) and finally they were baked in oven at 210°C for 25 minutes.

### EXAMPLE 2 (COMPARATIVE)

A bread dough containing, in weight parts, the following ingredients has been prepared:

| | |
|---|---|
| Wheat flour | 100 |
| Water | 50 |
| Vegetable oils | 6 |
| Yeast | 3 |
| Salt | 3 |
| Saccharose | 2 |

The above listed components were mixed with a classical spiral kneading machine for 2 minutes at a low speed and for 10 minutes at a high speed, then the dough thus obtained was left to stand for 15 minutes.

Afterwards, pieces of about 460 g were obtained from the mixture. Such pieces were pre-fermented for 15 minutes at 25°C and then transferred to moulds. These pieces were then subjected to rising for 90 minutes at 36°C and 90% r.h. and finally they were baked in oven at 210°C for 25 minutes.

### EXAMPLE 3 - TEST FOR HARDNESS EVALUATION

The bread loaves obtained according to examples 1 and 2 were packaged in polypropylene envelopes and stored for 30 days at a temperature of 20-25°C and in a room with r.h. 40-50%.

On the 15th and on the 30th day, the hardness of the bread has been evaluated, by means of a SMS Texture Analyzer TA-XT2i, comprising a vertical moving arm equipped with a measure probe that penetrates into the product to be tested. The used probe was of a cylindrical type with a diameter of 35 mm.

The hardness was evaluated by means of the TPA test applying a 25% non destructive double compression and with a sufficiently high load to two superimposed bread slices (each slice has been taken from a different bread loaf) for a total height of 20 mm.

In the following table 1 there are expressed in Newton the obtained hardness value, each value corresponding to the average of 12 compressions.

**Table 1**

| | EXAMPLE 1 | EXAMPLE 2 (REFERENCE) |
|---|---|---|
| On 15th day | 3.8 | 5.4 |
| On 30th day | 4.6 | 6.6 |

### EXAMPLE 4

A dough for brioche containing, in weight parts, the following ingredients has been prepared:

| | |
|---|---|
| Wheat flour | 90 |
| Eggs | 40 |
| Vegetable fats | 30 |
| Saccharose | 22 |
| Water | 15 |
| Yeast | 4 |
| Salt | 1 |
| Mixture 1:1 w/w h.p. starch: water 20 | |

The mixture of high-pressure treated starch ("h.p. starch") and water had been previously prepared by subjecting a 50% w/w wheat starch aqueous dispersion to a pressure of 600 Mpa for 5 minutes. During such a treatment the dispersion was held in a hermetically sealed container.

The above listed components, except for the vegetable fats, were mixed with a classical spiral kneading machine for 2 minutes at a low speed and for 10 minutes at a high speed, then the vegetable fats were added and the mixing went on for 6 minutes at a high speed. The thus obtained dough was then left to set for 15 minutes.

Afterwards pieces of 40 g about were obtained from the mixture, which were transferred to moulds and subjected to rising for 3 hours at 32°C and 85% r.h. and finally they were baked in oven at 200°C for 15 minutes.

### EXAMPLE 5 (REFERENCE)

A mixture for brioche containing, in weight parts, the following ingredients has been prepared:

| | |
|---|---|
| Wheat flour | 100 |
| Eggs | 40 |
| Vegetable fats | 30 |
| Saccharose | 22 |
| Water | 25 |
| Yeast | 4 |
| Salt | 1 |

The above listed components, except for the vegetable fats, were mixed with a classical spiral kneading machine for 2 minutes at a low speed and for 10 minutes at a high speed, then the vegetable fats were added and the mixing went on for 6 minutes at a high speed. The thus obtained dough was left to stand for 15 minutes.

Afterwards pieces of about 40 g were obtained from the mixture, which were transferred to moulds and subjected to rising for 3 hours at 32°C and 85% r.h. and finally they were backed in the oven at 200°C for 15 minutes.

### EXAMPLE 6 - TEST FOR HARDNESS EVALUATION

The brioches obtained from examples 4 and 5 were packaged in polypropylene envelopes and stored for 30 days at a temperature of 20-25°C in a room with r.h of 40-50%.

On the 15th and on the 30th day the hardness of the brioches has been evaluated, by means of the SMS Texture Analyzer TA-XT2i used in example 3, however equipped with a probe of the cylindrical type with a diameter of 10 mm.

The hardness was evaluated by means of the TPA test, applying a 25% non destructive double compression and with sufficiently high load to one slice of brioche being 20 mm high. From four brioches 12 slices were obtained (three from each brioche) and the measured value was obtained as average value of the 12 data taken from each slice.

In the following table 2 there are expressed in Newton the obtained hardness values which correspond to the average of 12 compressions.

**Table 2**

| | EXAMPLE 4 | EXAMPLE (REFERENCE) |
|---|---|---|
| On 15th day | 2.0 | 2.5 |
| On 30th day | 2.5 | 3.2 |

As it can be easily noted from the data of Tables 1 and 2, the bakery products obtained replacing a part of the starting flour with an identical amount of high-pressure treated starch have hardness values remarkably lower than those of the corresponding products prepared without high-pressure treated starch. This means that they keep their original softness features longer than the corresponding traditional bakery products, even without adding any foreign additives, such as emulsifiers, and without modifying the current manufacturing equipment and technology.

## Claims

1. A method for producing bread and bakery products in general, comprising the steps of:
- preparing a dough comprising flour and water;
- subjecting said dough to rising and baking
**characterized in that** at least 2% of the flour of said dough is replaced with high-pressure treated starch.

2. A method according to claim 1, wherein said high-pressure treated starch replaces 2-20% of the flour.

3. A method according to claim 2, wherein said high-pressure treated starch replaces 5-10% of the flour.

4. A method according to any one of the preceding claims, wherein said dough comprises amylolytic enzymes.

5. A method according to any one of the preceding claims, wherein said high-pressure treated starch is obtained from a starch selected among the group comprising wheat, rice, corn, tapioca, pea starch.

6. A method according to claim 5, wherein said high-pressure treated starch is obtained from wheat starch.

7. A dough for the production of bakery products comprising flour and water, **characterized in that** at least 2% of the flour of said dough is replaced with a high-pressure treated starch.

8. A bakery product obtainable by baking a dough according to claim 7.

9. A bakery product according to claim 8 having, after being stored at room temperature for 30 days, a hardness at least 20% lower than that of a bakery product obtained with identical steps of mixing, rising and baking, but starting from a dough in which the high-pressure treated starch is replaced by an identical amount of flour.

## Patentansprüche

1. Verfahren zur Herstellung von Brot und Backwaren im Allgemeinen, umfassend die folgenden Schritte:
- Herstellen eines Teigs, umfassend Mehl und Wasser;
- Unterwerfen des Teigs einem Gehen und Backen,
**dadurch gekennzeichnet, dass** mindestens 2 % des Mehls für diesen Teig durch mit Hochdruck behandelte Stärke ersetzt wird.

2. Verfahren nach Anspruch 1, wobei die mit Hochdruck behandelte Stärke 2 - 20 % des Mehls ersetzt.

3. Verfahren nach Anspruch 2, wobei die mit Hochdruck behandelte Stärke 5 - 10 % des Mehls ersetzt.

4. Verfahren nach einem der vorhergehenden Ansprüche, wobei der Teig amylolytische Enzyme umfasst.

5. Verfahren nach einem der vorhergehenden Ansprüche, wobei die mit Hochdruck behandelte Stärke aus einer Stärke, die aus der Gruppe Weizen, Reis, Mais, Tapioka, Erbsenstärke ausgewählt ist, erhalten wird.

6. Verfahren nach Anspruch 5, wobei die mit Hochdruck behandelte Stärke aus Weizenstärke erhalten wird.

7. Teig zur Herstellung von Backwaren, umfassend Mehl und Wasser, **dadurch gekennzeichnet, dass** mindestens 2 % des Mehls für den Teig durch eine mit Hochdruck behandelte Stärke ersetzt ist.

8. Backwaren, erhältlich durch das Backen eines Teigs nach Anspruch 7.

9. Backwaren nach Anspruch 8, welche nach einer Lagerung bei Raumtemperatur für 30 Tage eine Härte aufweisen, die mindestens 20 % niedriger als die von Backwaren ist, die mit identischen Schritten des Mischens, Gehen und Backens erhalten wurden, wobei aber von einem Teig ausgegangen wurde, bei dem die mit Hockdruck behandelte Stärke durch eine identische Menge an Mehl ersetzt ist.

## Revendications

1. Un procédé de production de pain et de produits de boulangerie en général, comprenant les étapes consistant à :
- préparer une pâte comprenant de la farine et de l'eau,
- faire lever et faire cuire cette pâte,
**caractérisé en ce qu'**au moins 2 % de la farine de ladite pâte est remplacée par de l'amidon traité à haute pression.

2. Un procédé selon la revendication 1, dans lequel ledit amidon traité à haute pression remplace 2 à 20 % de la farine.

3. Un procédé selon la revendication 2, dans lequel ledit amidon traité à haute pression remplace 5 à 10 % de la farine.

4. Un procédé selon l'une quelconque des revendications précédentes, dans lequel ladite pâte comprend des enzymes amylolytiques.

5. Un procédé selon l'une quelconque des revendications précédentes, dans lequel ledit amidon traité à haute pression est obtenu à partir d'un amidon choisi dans le groupe comprenant l'amidon de froment, de riz, de maïs, de tapioca, de pois.

6. Un procédé selon la revendication 5, dans lequel ledit amidon traité à haute pression est obtenu à partir d'amidon de froment.

7. Une pâte pour la production de produits de boulangerie comprenant de la farine et de l'eau, **caractérisée en ce qu'**au moins 2 % de la farine de ladite pâte est remplacée par de l'amidon traité à haute pression.

8. Un produit de boulangerie susceptible d'être obtenu par cuisson d'une pâte selon la revendication 7.

9. Un produit de boulangerie selon la revendication 8 présentant, après avoir été conservé à la température ambiante pendant 30 jours, une dureté au moins 20 % inférieure à celle d'un produit de boulangerie obtenu par des étapes identiques de mélange, levée et cuisson, mais à partir d'une pâte dans laquelle l'amidon traité à haute pression est remplacé par une quantité identique de farine.
